(19) Europäisches Patentamt

European Patent Office

Office européen des brevets

(11) **EP 1 615 442 A1**

(12) **EUROPEAN PATENT APPLICATION**

(43) Date of publication:
**11.01.2006 Bulletin 2006/02**

(51) Int Cl.:
*H04N 7/26* (2006.01)    *H04N 7/50* (2006.01)

(21) Application number: **04015845.3**

(22) Date of filing: **06.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Visiowave S.A.**
**1024 Ecublens (CH)**

(72) Inventors:
• **Ziliani, Francesco**
**1004 Lausanne (CH)**
• **Santa Cruz Ducci, Diego**
**1201 Geneve (CH)**
• **Reichel, Julien**
**1006 Lausanne (CH)**

(74) Representative: **Bugnion Genève**
**Bugnion S.A.**
**Conseils en Propriété Industrielle**
**Case Postale 375**
**1211 Genève 12 (CH)**

(54) **Method of temporal decomposition and reconstruction of an input video signal**

(57)    The present invention relates to a method for temporal decomposition and reconstruction of an input video signal based on the motion compensated temporal filtering (MCTF) framework. According to the method at least one external video frame is used during one or more of the prediction and/or update steps as an additional video frame reference. The video frame is available as input both to the decomposition and reconstruction stage. The word external means that the video frame is not itself a result of the current MCTF processing.

Fig.5

## Description

The present invention relates to a method for temporal decomposition and reconstruction of an input video signal based on the motion compensated temporal filtering (MCTF) framework.

Video coding can be separated into three different tasks, where each task is aimed at exploiting one type of redundancy in the video and thus improve compression efficiency.

- Temporal prediction: to exploit the temporal redundancy between the video frames present in any video. This step is generally conducted trough motion estimation and compensation (ME/MC).
- Spatial transform: to exploit the spatial correlation between neighboring pixels. This step is generally done using a DCT or a Wavelet transform, which are efficient in exploiting the properties of natural scenery for compression purposes.
- Quantization and Entropy coding: to exploit the statistical redundancy present in any data to be compressed. This last step is generally encoded using run-length and Huffman codes or Arithmetic coding.

The present invention is focused on the first task: the temporal prediction.

Most of today's compression engines use prediction with motion compensation (MC). In this case the video of the previous frame (or of some of the previous frames) is used to predict the current frame after having being motion compensated. In order to avoid drift between the encoder and the decoder, the frames used for the prediction on the encoder side are generally not the original frames, but the decoded ones. This approach is generally referred to as "closed-loop" coding, because the encoder must be aware of the way the video is going to be decoded to do a correct prediction.

However there are many applications where it is not possible to know in advance what the decoder is going to need, in terms of video frame rate, frame size or quality. This comes from the fact that in a client/server environment, where the client and the server are linked through a network, the encoder (on the server side) and the decoders (on the client side) are not known in advance. For instance there can be many clients with different needs, or the client and/or network capacities will change over time. In this framework, scalable video coding is needed. In order to enable such a feature, the compression system should be open-loop, i.e. the decoder properties are not needed on the encoder side. These demands can be solved by advanced technology such as Motion Compensated Temporal Filtering (MCTF). The main advantages of MCTF compared to other approaches are that it offers not only scalability features, but also compression performances close to state of the art compression CODECs such as MPEG-4 and H.264. Moreover it has been shown that this approach is theoretically superior to the so called hybrid scheme using closed loop motion compensation.

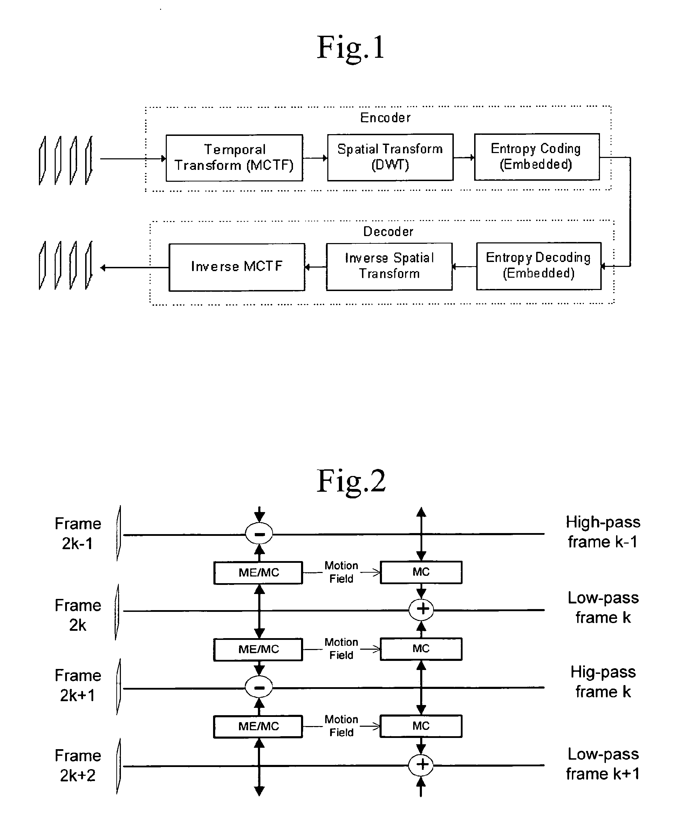

The fact that it uses an open loop has the advantage that the encoder does not need to have prior knowledge of how the stream (which quality, and even which resolution) will be decoded. Thus, combined with spatially scalable (such as wavelet based CODECs for instance) and quality scalable CODECs, this temporal prediction transform can offer a complete spatio/temporal/quality scalable CODEC. An example of such encoding/decoding structure is presented in Figure 1.

The MCTF has plenty of similarity with conventional ME/MC compression/decompression schemes. Video frames are predicted from neighboring ones using MC, but the difference lies in the fact that the predicted frames are used to "update" the frames that were used to predict them. This prediction mechanism can be seen as a temporal wavelet decomposition using the lifting scheme and MC.

Only the principles relevant to the current invention will be described here. A list of references identified as [1] to [11] is enclosed. For more information on the MCTF itself please refer to [1], [2], [3], [4].

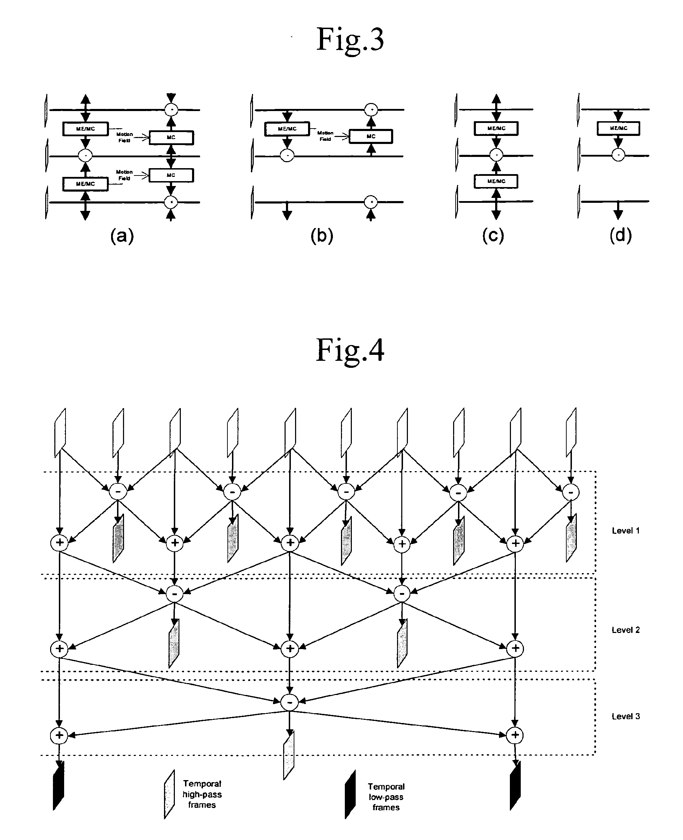

In the following example the so called 5/3 MCTF architecture will be presented (see Figure 2). The current invention is not restricted to this MCTF structure; any structure can also be used. For examples of other structures see Figure 3.

The 5/3 MCTF prediction is presented in Figure 2, where the typical lifting scheme representation of a wavelet is used for one level of the MCTF. The input frames are transformed into temporal high and low-pass frames during one level of MCTF. This level is separated in a number of steps (in most cases 2) called predict (the first one) and update (the second one) steps. The output of the prediction step is called a temporal high-pass frame, whereas the output of the update step is called temporal low-pass frame. Due to the MC, most of the information is concentrated in the low-pass frames. Finally, to be efficient in terms of compression, the procedure is applied recursively on the low-pass frame, thus concentrating the main information on a reduced number of frames. Finally the number of times the prediction/updates pairs are applied corresponds to the total number of levels of the MCTF. An example of the overall MCTF transform is presented in Figure 4 with 3 levels of temporal transform using the 5/3 MCTF. Each level is composed of a predict step (symbolized by a (-) ) and an update step (symbolized by a (+) ) . For clarity reasons the ME/MC blocks are omitted from the figure, however they must be used for an efficient implementation of the MCTF.

One of the direct impacts of the MCTF is that it natively enables the temporal scalability. In order to reduce the temporal frame rate, it is sufficient to reduce the number of MCTF levels performed at the decoder. This will reduce the frame rate by a factor two for each level that is omitted at the decoder. Thus in order to offer N levels of temporal scalability, it is sufficient to perform N levels of MCTF.

Figure 4 illustrates the MCTF principle and will be modified in the rest of the document to show where the proposed invention takes place.

An example of a 3 level 5/3 MCTF is presented in Figure 4. Each level of MCTF is composed of a predict (-) and an update (+) step. The results of the update step, i.e. the temporal low-pass frames are used for the next level of MCTF. This example presents only a sub-part of the full video stream to be transformed. The frames in black are called temporal low-pass frames and the frames in light grey are called temporal high-pass frames.

As stated previously, the MCTF is generally used in conjunction with a wavelet or other kind of spatial transform enabling spatial scalability. In this case the spatial transform can be realized either before or after the temporal transform. This is generally referred to as t+2D or 2D+t, when the temporal transform is done in the first or second position respectively. In the following t+2D will be used as an example; however the invention can be incorporated in any of the two structures or a combination of them. The overall structure of this type of codec is presented in Figure 1.

However the MCTF has some drawbacks compared to the conventional closed-loop coders. One of the reasons behind the good behavior of the MCTF is the presence of the update step during the temporal transform. But this update step introduces an intrinsic delay between the time a frame is compressed and the time it can be decompressed. This delay is dependant on the GOP size, or the number of temporal prediction levels. Thus to be efficient in terms of compression, the MCTF CODEC needs a large number of temporal prediction levels, but each one of those levels will increase the time between a frame is encoded and the time it can be decoded.

The delay can be computed based on the length of the wavelet filter as described in [5] for the case of line based DWT, but the same principle can be applied to the time dimension. In this case the delay expressed in number of frames is equal to $D=(2^N-1)S$, where N is the number of temporal levels and S is the half size (floor operation) of the longest filter. In case of the 5/3 MCTF this gives a delay of $D=2^{N+1}-2$, so D=30 frames for 4 levels of temporal transform or D=6 frame for 2 levels of temporal transform. However, even if only 2 levels of scalability are needed, 4 or more levels of temporal transform are needed to have an efficient entropy coding. Thus a solution enabling the reduction of the number of temporal transform levels without reducing the compression performances is needed in low-delay applications.

Another drawback is that because of the update step, it cannot work in the same framework as already existing standards. A decoder designed for an MPEG-2 stream for instance can be difficultly adapted to handle MCTF compressed streams. Moreover, contrary to existing scalable CODECs [6], [7], [8], [9], [10] (especially standards compliant) there is no notion of a base layer. Thus MCTF based CODECs do not include any sub-streams that could be decoded by legacy hardware or software.

The present invention aims to solve this problem by including some side information into the MCTF framework as defined in the characterized portion of claim 1. According the claimed method this information can be encoded and used as a base layer compliant to legacy decoding software/hardware.

In the dependent claims variations of the general method claimed in claim 1 are defined.

The present invention method and as defined in the claims will be described with the help of the enclosed figures.

Figures 1 to 4 illustrate prior art methods.

Figure 1 illustrates the overall structure of a MCTF based spatio-temporal-quality scalable Codec.

Figure 2 illustrates 5/3 MCTF principles.

Figure 3 is an example of different MCTF structures. (a) 5/3 MCTF, (b) Haar MCTF, (c) 1/3 MCTF or UMCTF, (d) Haar UMCTF.

Figure 4 is an example of 3 level 5/3 MCTF.

Figure 5 illustrates the introduction of external video signal, or base layer, into the last level of the MCTF transform of a scalable codec, on the decomposition side, according to the present invention.

Figure 6 is an example of introduction of the base layer into the last level of the MCTF transform with 2 levels of spatial and 3 levels of temporal scalability.

Figure 7 is an example of introduction of the base layer encoded with the same frame rate as the input video and with 2 levels of spatial and 3 levels of temporal scalability.

Figure 8 illustrates the insertion of the external video signal during the update step of a level of the MCTF transform.

Figure 9 is an example of insertion of external video signal in an update step inside the complete MCTF temporal decomposition.

Figure 10 is an example of scalable decoding with the use of external video signal at different temporal levels.

Figure 11 is an example of insertion of a zoomed external video signal in an update step inside the MCTF temporal decomposition.

Figure 12 is an example of bitstream structure, for 3 levels of temporal and spatial scalability, with a base layer (in black) at the lowest spatio-temporal resolution. (a) The full bitstream. (b) The bitstream at a reduced frame-rate. (c) The bitstream at 1/4 of the frame rate and with a reduced resolution.

Figure 13 is an example of introduction of the external video signal during the prediction step of a level of the MCTF.

Figure 14 is an example of inclusion of a zoomed external video signal in a prediction step inside the complete MCTF temporal decomposition.

Figure 15 is an example of temporal reconstruction using the MCTF and external video signal inserted during the prediction step. (a) Reconstruction of the original rate. (b) Reconstruction at half the original rate.

Figure 16 is an example of bitstream structure with a base layer introduced at half frame rate. (a) The original stream with the base layer in black. (b) The base layer at half the original rate. (c) The fully scalable layer at half the original rate. (d) The scalable layer at 1/4 of the original rate and at reduced resolution.

Basic Principles:

In order to enable backwards compatibility and reduce the latency introduced by the scalable CODEC, the current invention introduces some external video signal into the MCTF temporal prediction framework. This knowledge can be encoded using any type of compression technology, including closed-loop CODECs such as MPEG standards for instance [11]. In this case the encoded external video signal can be seen as a "base layer", which will be used both at the encoder and at the decoder of the scalable video CODEC.

This base layer enables an improvement of the coding performance of the scheme, as it does not need to pay any performance penalty due to scalability. Moreover, the base layer can be encoded in order to provide backwards compatibility with legacy software/hardware equipment. It also adds the possibility to reduce the number of temporal transform levels needed for efficient coding of the video and improved error resilience. All those features will be described in the last section of this document.

The external knowledge is introduced into the temporal transform during the lifting steps of the MCTF. The following sections will describe in more detail the different ways to include this external video signal and the implication on the compression performance and features.

Inclusion of external video signal at the base of the MCTF:

The external video signal (henceforth also called base layer when coding is considered) can be introduced at different points in the MCTF framework. The position where the base layer is introduced will have a direct impact on the number of spatial and temporal scalability levels available at the decoder.

The simplest case is when no spatial scalability is needed and that the base layer is introduced at the "end" of the MCTF transform. This allows an efficient encoding of the so called low-pass temporal frames. Moreover if the base layer encoding has a low encoding/decoding delay, this enables a reduction of the latency of the system (because less levels of MCTF are needed) without decrease in the compression performance (because the temporal low-pass frames are still coded using a predictive scheme).

The decomposition can be described for any MCTF structure using the following procedure:

- Compute the N levels of MCTF decomposition of the input video signal.
- Use the external video signal to predict the resulting temporal low-pass frames using a prediction function $g_2()$.

And the reconstruction procedure can be described as:

- Use the external video signal to do an inverse prediction $g'_2()$ in order to recover the low-pass frames.
- Compute the N levels of inverse MCTF.

The prediction functions $g_2()$ and $g'_2()$ are dependent of the external video signal and of the way it is used in the MCTF. In a preferred implementation those functions are the computation of the difference/sum between the temporal low-pass frames and one of the external video frames, where the external video signal has a frame rate of $1/2^N$ of the original frame rate. Moreover the external video frames are the result of the decompression of the base layer bitstream, which is available both at the decomposition and at the reconstruction side of the MCTF transform.

It is possible to merge the prediction phase with the last update step of the MCTF in order to reduce the memory access and the complexity of the insertion of the external video frames.

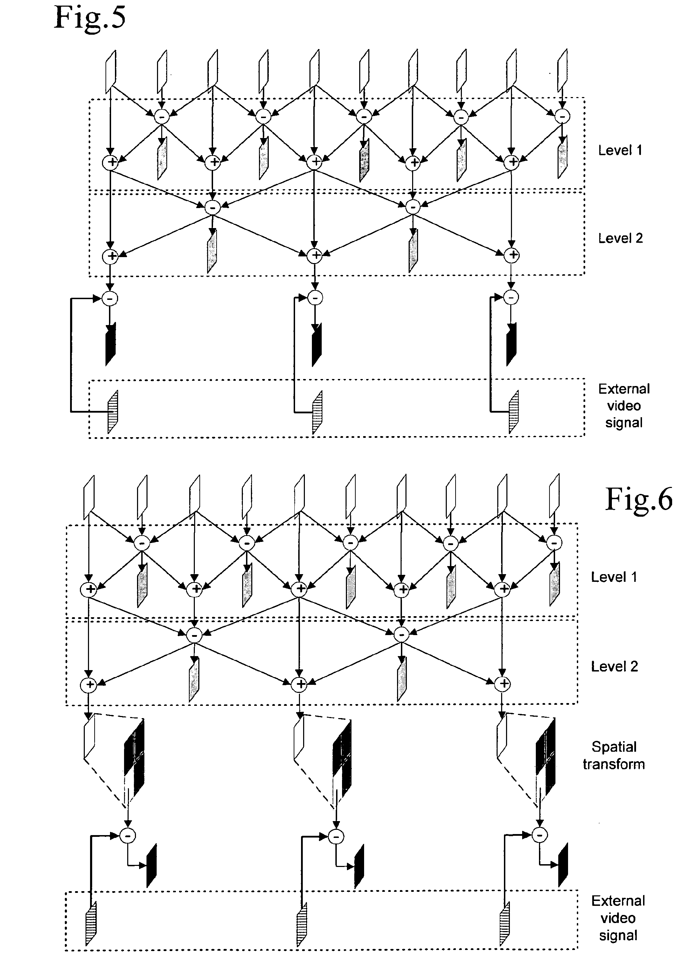

An example of such scheme is presented in Figure 5, with 2 levels of MCTF. The external video signal, the same one that will be available at the reconstruction side, is subtracted from the low-pass temporal subbands. The modified low-pass frames are also encoded using the scalable coder, as it would have been done without the external video signal. The decoder is the dual of this scheme, where the subtraction is replaced by an addition. In this example the base layer is working at 1/4 of the frame rate of the original video. Note that the quality scalability is still available as long as the quality of the video is "higher" than the quality of the base layer.

When spatial scalability is also needed, it is possible to introduce the information of the base layer only after a given number (k) of spatial transform (typically wavelet) levels have been performed after the MCTF. In this preferred implementation the prediction function $g_2()$ and $g'_2()$ are defined as an inverse spatial transform of k levels and a subtraction, addition respectfully. However, for an implementation point of view, it is more efficient to compute the spatial transform on the input data first and then do the prediction. But the two implementations result in exactly the same information to be encoded by the scalable CODEC. For instance Figure 6 presents such a scheme with the introduction of the external video signal after one level of spatial transform. Note that the temporal low-pass frames have been blown up, in order to facilitate the visibility of the figure. The decoder is the dual of the current schema, where the subtraction is replaced by an addition and all the transforms (spatial and temporal) are inverted. In case further levels of spatial scalability are needed, then further levels of spatial transform must be applied before the introduction of the external video signal. In this example the base layer video is at 1/4 of the frame rate of the original video and at 1/2 of its resolution.

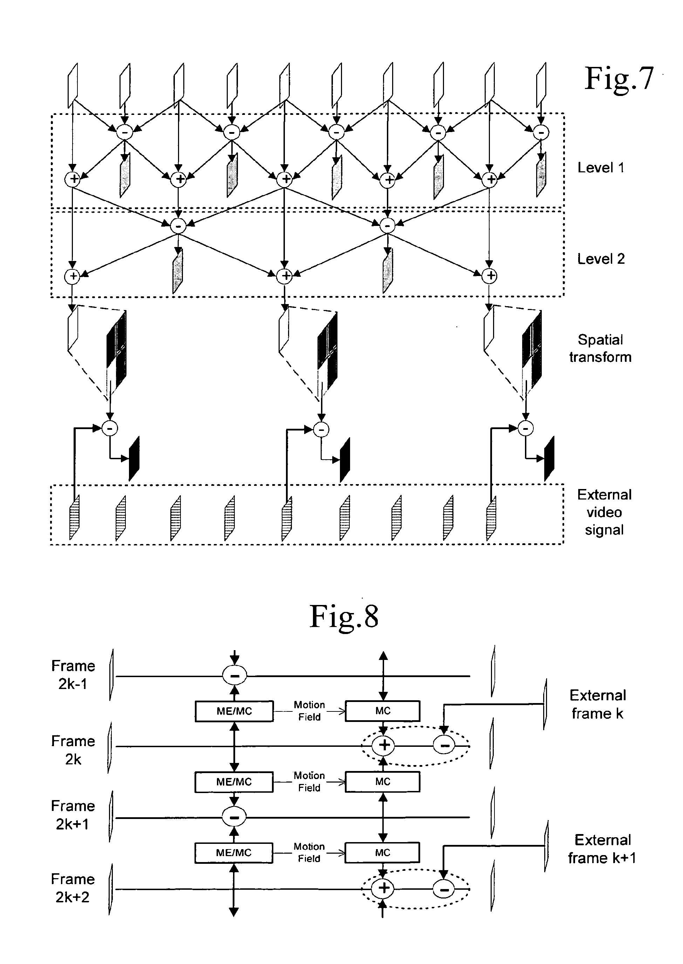

One of the limitations of the scheme presented in the current section is that the number of temporal transform (MCTF) levels is limited by the frame-rate of the base layer. There are two solutions to this limitation: either have a base layer with a higher frame-rate and not use all the frames as external video signal (see Figure 7 for an example derived from Figure 6, where the base layer is encoded at the original framerate, However, due to the fact that two levels of MCTF are used for compression effiency reasons, only 1/4 of it's frames are used as external video information), or include the external video signal inside the MCTF and not only at the last level of the temporal transform. This last approach is described in the next section.

Inclusion of external video signal during the update steps:

The main limitation of the insertion of the external video signal only at the end of the spatio-temporal decomposition is that it is not very flexible. If one wants a base layer with a high frame rate, then the efficiency of the scalable layer will go down. On the other hand if the efficiency of the scalable coder is maximized, then it is no longer possible to choose the characteristics of the base layer.

A solution to this problem is to insert the base layer inside any level of the temporal decomposition. This approach is a generalization of the approach presented in the previous section.
First a given number of temporal transform levels are performed in order to reach the desired frame rate for the base layer (note that this includes the case where zero temporal decompositions are done). Then the external video signal is introduced as an additional reference into the update step of the MCTF. This will be referred to in the following as the modified MCTF level or the modified update step. Finally the resulting low-pass frames are further decomposed using the MCTF scheme. The reconstruction scheme is the dual of the decomposition one, where each operation is processed in the reverse order.

The operation conducted during the update step using the external video signal can be described

$$X'_{2t} = X_{2t} + g(\ldots, X'_{2t-1}, \ X'_{2t+1}, \ldots, EX_t, \ EX_{t+1}, \ldots),$$

Where $X'_{2t}$ is the low-pass frame, $X_t$ is the input of the MCTF, $EX_t$ is the external video signal and $g()$ is the prediction function of the update step. In a preferred implementation the function $g()$ can be split into two independent functions $g_1()$ and $g_2()$ such that:

$$g(\ldots) = g_1(\ldots, X_{2t}, X_{2t+2}, \ldots) - g_2(EX_t),$$

where $g_1()$ is a conventional MCTF update step, and $g_2()$ is the base layer prediction function.
For the reconstruction the dual update step is defined as

$$Y_{2t} = Y'_{2t} - g'(\ldots, Y'_{2t-1}, Y'_{2t+1}, \ldots, EX_t, EX_{t+1}, \ldots),$$

Where $Y'_{2t}$ is the low-pass frame coming either form the previous level of MCTF or directly from the decoded stream, $Y_t$ is the output of the current MCTF level, $EX_t$ is the same external video signal as in the decomposition case and g'() is the inverse prediction function of the update step. In a preferred implementation the function g'() can be split into two independent functions $g'_1()$ and $g'_2()$ such that:

$$g'(\ldots) = g'_1(\ldots, Y_{2t}, Y_{2t+2}, \ldots) - g'_2(EX_t),$$

And $g'_1$ is the inverse of the conventional update step $g_1()$, and $g'_2()$ is the inverse of the base layer prediction function.

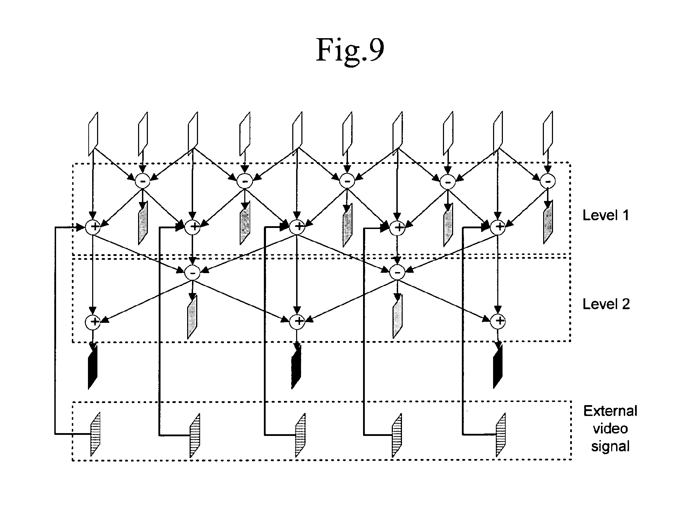

In a preferred implementation one external frame is directly subtracted from the current temporal low-pass frame after each update step (see Figure 8). On the reconstruction side this same frame is added back to the low-pass frame before computing the inverse update step of the MCTF. In this case the functions $g_2()$ and $g'_2()$ become the unity functions. Note that the subtraction/addition operation can be conducted at the same time as the update step (see dotted lines in figure 8) in order to reduce the memory accesses and the complexity of the implementation. The principle of this modified MCTF level is shown in Figure 8. Finally note that in this implementation the external video frame rate is equal to $1/2^{n+1}$ of the original video rate, where n is the number of MCTF levels before the insertion of the external video signal. The whole MCTF decomposition principle is shown in Figure 9, with 2 levels of MCTF and the inclusion of the base layer after the first one. In this example one level of MCTF is applied, with the insertion of the external video frame during the update step. Finally, one more MCTF decomposition is computed. The decoder acts as the dual of the encoder. The first level of inverse MCTF is computed first, and then the second level of MCTF is computed using the external video frame in its update step.

The advantage of this approach is that it enables the use of a base layer with high frame-rate without any sacrifice on the compression performance of the scalable video. Another interest is that the inclusion of the prior information at this level of the MCTF does not mean that the number of temporal scalability levels is reduced. Thus this compressed stream has the full scalability of the MCTF structure, i.e. if 4 levels of dyadic MCTF were used, then it is possible to decode the video at full frame rate, at 1/2, 1/4, 1/8 or even 1/16th of the original rate. If in addition the base layer includes some form of temporal scalability (trough B frames for instance in the case of MPEG-2 or MPEG-4 [11], or ad-hoc prediction pattern in the case of H.264) then the full system is optimally temporally scalable. If this is not the case, the decoding is still possible however it will be less efficient both in terms of compression efficiency and processing power.

In order to recompose a valid video signal at reduced frame rate the following procedure must be applied.

- If the output frame rate is strictly larger than the frame rate of the base layer, the same reconstruction procedure is applied as in the case of the reconstruction of the original video signal.
- If the output frame rate is equal to the frame rate of the base layer, then the inverse update steps must still be computed, using 0 to replace the signal $(\ldots, Y'_{2t-1}, Y'_{2t+1}, \ldots)$ in the g'() function.
- If the output frame rate is lower than the frame rate of the base layer, then the modified inverse update steps must still be computed for each output frames $Y_t$, but using 0 to replace the signal $(\ldots, Y'_{2t-1}, Y'_{2t+1}, \ldots)$ in the g'() function.

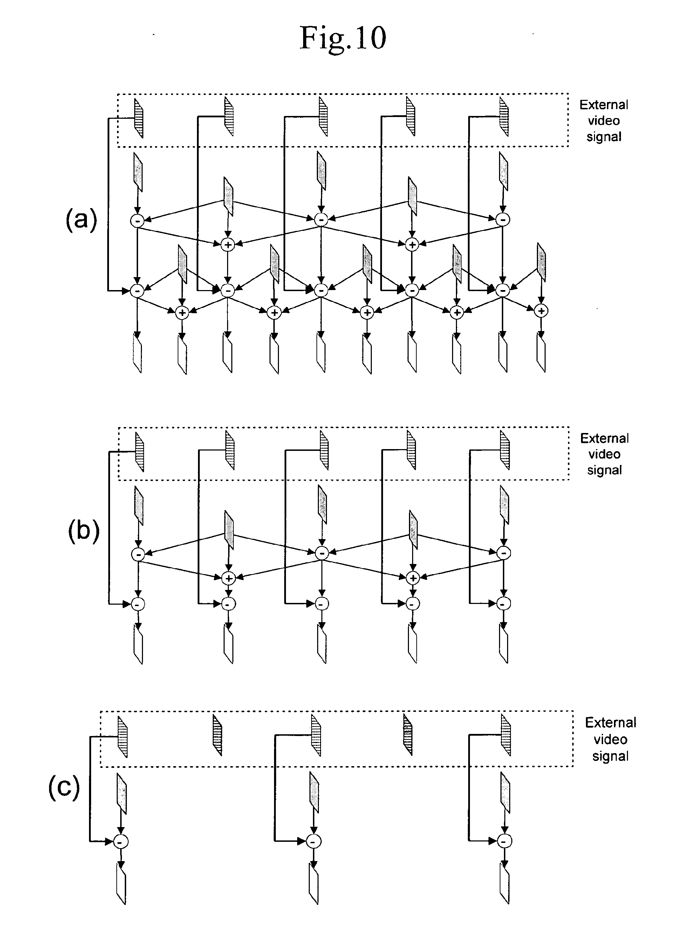

The inverse MCTF procedure is presented for the case of 2 levels of MCTF, a base layer at 1/2 of the original rate and three different decoded rates in Figure 10. The decomposition structure is the one presented in Figure 9. (a) Stream decoded at the original frame rate. (b) Stream decoded at 1/2 of the frame rate by dropping the last level of MCTF reconstruction. Note that even if the update step where the external information is not performed, the external information is still added to the reconstructed video. (c) Stream decoded at 1/4 of the frame rate by dropping the 2 levels of MCTF reconstruction. Once again the external information is still used for the remaining frames. If the grey frames of the external video in example (c) are B frames, they can also be dropped by the base layer.

An important point to stress out is that the information contained in the base layer (up to the desired frame rate) is necessary to decode the video stream, regardless of the decoded frame size or quality. Moreover the decoded quality cannot be lower than the quality of the base layer as this last one is assumed to be non scalable. Thus the compressed bitstream must always include the base layer bitstream.

If spatial scalability is needed, then there is the need for a way to adapt the decoded base layer to the size of decoded video. This problem is solved in modifying the g() and g'() to include some scaling of the external video.

In the preferred implementation where the g() function is split in two functions, then the unitary $g_2()$ function is replaced by a scaling function. The same procedure is applied on the reconstruction side.

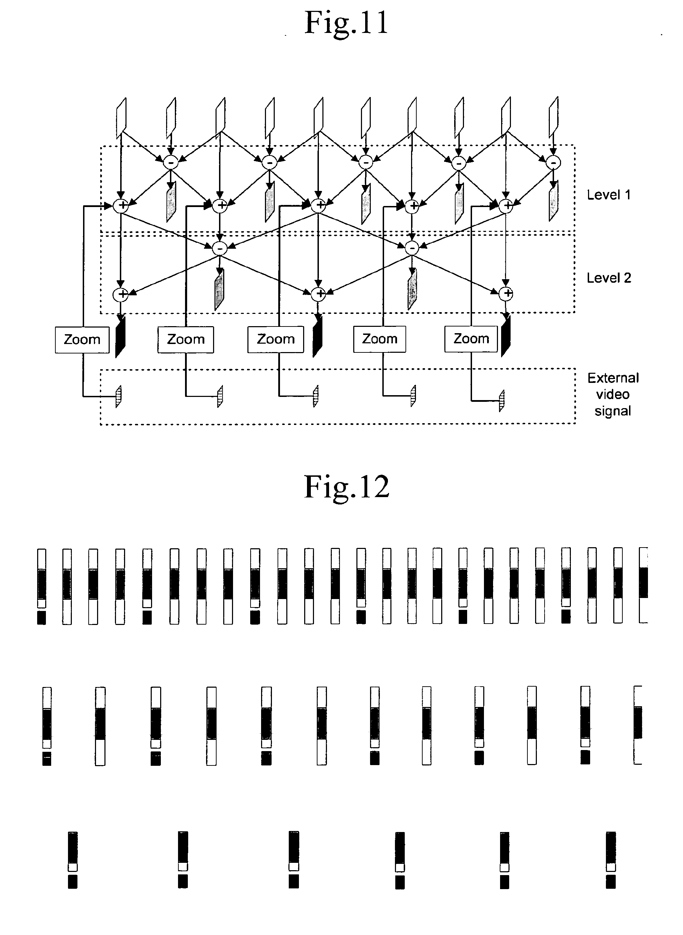

This principle is described graphically in Figure 11. The size of the base layer is made independent of the original size of the video, by the insertion of a zooming operation before the subtraction of the external video signal.Note that the zooming operation can be different on the decoder and the encoder side, and that it is not restricted to an increase of the size of the base layer video. For instance, the input video (of size 4CIF) can be encoded with a base layer of size QCIF. Then the decoder may decode only the CIF resolution for complexity reasons. In this case the base layer was zoomed to 4CIF at the encoder, but only to CIF at the decoder. Note that the decoder could also decode the same stream in QCIF resolution (in this case the zooming operation is simply the unity operation) or even smaller resolution (QQCIF for instance), which would lead to a zooming down operation.

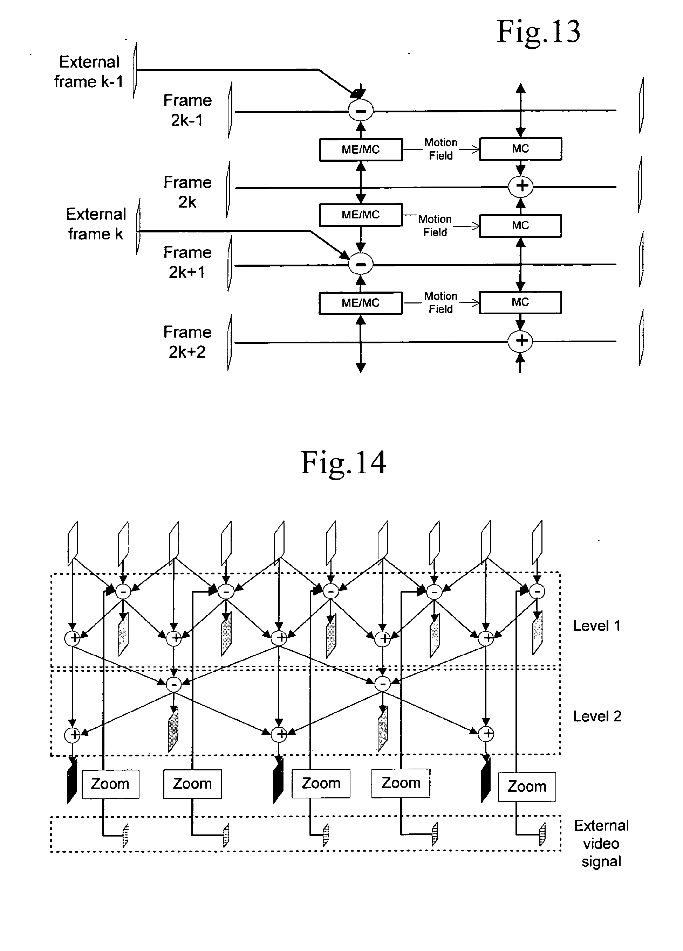

With the insertion of the zooming operation, it is now possible to decode the video at any resolution. But in order to be efficient in terms of compression and processing power, the decoding should be restricted to a resolution bigger or equal to the one of the base layer. However smaller resolution is still possible, just not in an efficient manner. An example of the bitstream and sub-bitstream structure is presented in Figure 12. It can be observed that the amount of bits needed by the base layer is small and that it is needed regardless of the decoded frame rate and size. The base layer information is always needed to decode any stream structure.

The main advantages of this approach is that the external video signal can be encoded using an efficient non-scalable CODEC, creating a base layer optimized in regards to the quality and the bitstream sizes. Moreover, as this base layer does not need to be scalable, low-latency predictive schemes can be used to encode it. When video compression is considered, most of the information (i.e. most of the coding cost) is located in the temporal low-pass frames. Thus with only a reduced number of MCTF levels (2 or 3) followed by an efficient encoding of the base layer performances equivalent (or even better) to 4-5 levels of MCTF can be achieved, with much smaller encoding/decoding delay.

Inclusion of external video signal during the prediction steps:

The approach presented so far has one drawback: the prior information can only be inserted at the low-pass MCTF frames, which means that it is needed to decode any version of the scalable bitstream. In some situation it might be desirable to have a base layer, which can be used for some application, but could also be discarded when not needed. In order to offer this feature the prior information should no longer be inserted on the low-pass MCTF frames (which are always needed), but on the high-pass frames, which can be discarded by the temporal scalability.

In this case the external video signal should be inserted during the prediction step of the MCTF, thus modifying only the temporal high-pass frames. In this case the prediction step of the MCTF is modified to include additional information coming from the external video signal (or base layer in case of video coding). This is done during the ME/MC phase of the MCTF in modifying Figure 2 to include an external prediction as shown in Figure 13 (where the base layer, with a frame rate of 1/2 compared to the original video, is inserted as an additional prediction hypothesis during the prediction step of the MCTF). Even if a simple subtraction operation (-) is used in the figure, this operation is in fact a complex pixel/block based merging of the different motion hypothesis as it is this case in most MCTF schemes.

Note that the external video signal can be used at any sub-frame rate with this technique, even non-dyadic sub-rates. Moreover, all the techniques proposed in the previous section (zooming, temporal scalability of the base layer) can be applied here (see Figure 14 for instance, where the base layer video size is adapted to the original video size through zooming. In this example the base layer is only needed when the full frame rate is decoded. Any other frame rate does not need the base layer information).

The procedure for the decomposition and the reconstruction of the input video signal is the following. First a given number of temporal transform levels are performed in order to reach the desired frame rate for the base layer (note that this includes the case where zero temporal decompositions are done). Then the external video signal is introduced as an additional reference into the prediction step of the MCTF. Finally the resulting low-pass frames are further decomposed using the MCTF scheme. The reconstruction scheme is the dual of the decomposition one where each operation is processed in the reverse order.

The operation conducted during prediction step using the external video signal can be described as

$$X'_{2t+1} = X_{2t+1} - f(\ldots, X_{2t}, X_{2t+2}, \ldots, EX_t, EX_{t+1}, \ldots),$$

Where $X'_{2t+1}$ is the high-pass frame, $X_t$ is the input of the MCTF, $EX_t$ is the external video signal and f() is the prediction function of the predict step. In a preferred implementation the function f() can be split into two independent function $f_1()$ and $f_2()$ such that:

$$f() = k * f_1(\ldots, X_{2t}, X_{2t+2}, \ldots) + (1-k) * f_2(EX_t),$$

where $f_1()$ is a conventional MCTF prediction step used for all MCTF levels, k is a weighting parameter which can change on a pixel/block basis, and $f_2()$ is the base layer prediction function.
For the reconstruction the dual predict step is defined as

$$Y_{2t+1} = Y'_{2t+1} + f'(\ldots, Y_{2t}, Y_{2t+2}, \ldots, EX_t, EX_{t+1}, \ldots),$$

Where $Y'_{2t+1}$ is the high-pass frame coming either form the previous level of MCTF or directly from the decoded stream, $Y_t$ is the output of the current MCTF level, $EX_t$ is the same external video signal as in the decomposition case and f'() is the inverse prediction function of the predict step. In a preferred implementation the function f'() can be split into two independent function $f'_1()$ and $f'_2()$ such that:

$$f'() = k * f'_1(\ldots, Y_{2t}, Y_{2t+2}, \ldots) + (1-k) * f'_2(EX_t),$$

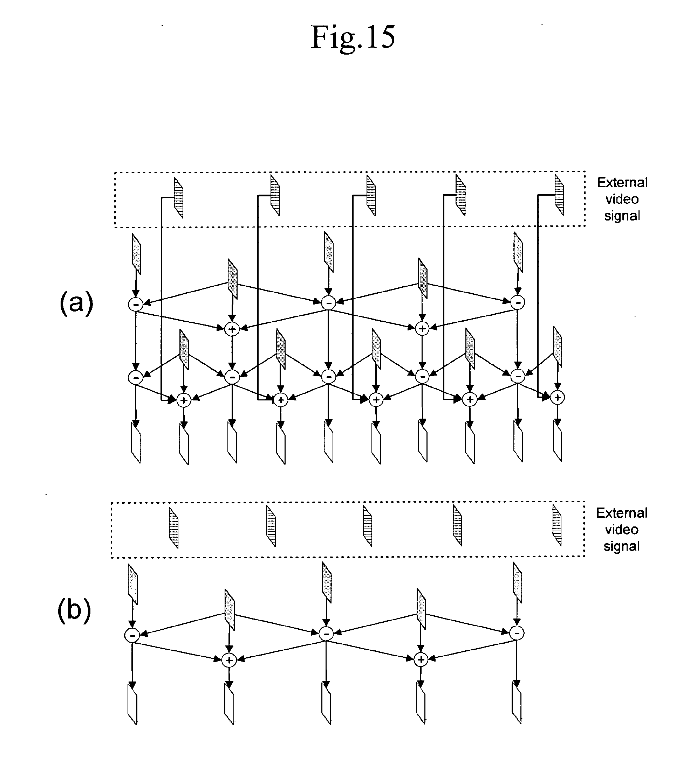

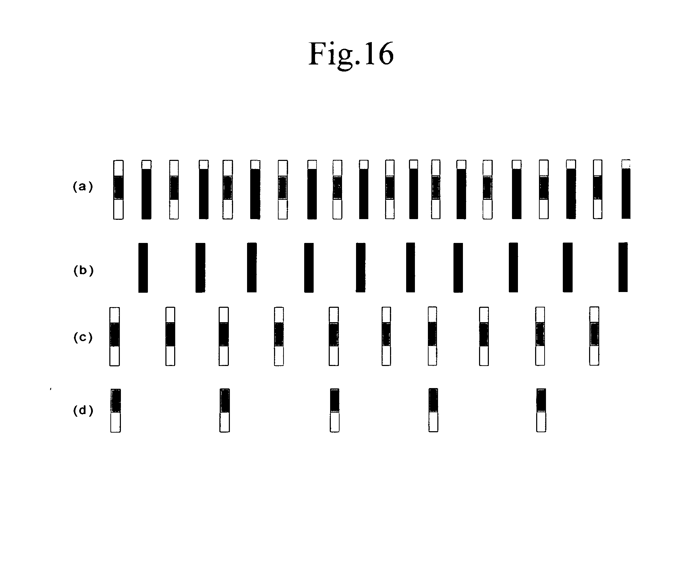

And $f'_1$ is the inverse of the conventional predict step $f_1()$, k is the same weighting parameter as the one used in the decomposition phase, and $f'_2()$ is the inverse of the base layer prediction function.
Another advantage of this approach is that it is possible to include multiple base layers (at different frame rates for instance) using the fact that the MCTF uses different levels of temporal transforms. Moreover it can also be used together with the base layer of the previous section, without any restrictions.
Finally there is one restriction with this approach. The quality of the decoded stream should be better than the one of the base layer, if it is used. This means that (to re-use the example of Figure 14) the quality of the full rate video must be better than the quality of the base layer. However the quality of the half rate video has no constraints, as the base layer is no longer used. Moreover there is a slight compression efficiency loss due to the fact that some frames (the first of each GOP) must actually be coded without prediction twice, once for the base layer and once for the scalable layer.
With this type of inclusion of external video signal, the bitstream structure would be slightly modified compared to Figure 12, because the external video signal is inserted on discardable frames. In this case it is no longer necessary to have low-bitrate for the base layer (to keep the scalability properties of the scalable layers), as it is no longer needed for all the frames as shown in Figure 15, where an example of temporal reconstruction using the MCTF and external video signal inserted during the prediction step is represented. (a) shows reconstruction of the original rate. The base layer is needed during the inverse predict step. (b) shows reconstruction at half the original rate. Because the prediction step, where the external video is used, is no longer needed, the external video signal itself is no longer used for the reconstruction. Note that there are now two different video streams at half the original rate: the one coming from the MCTF and the base layer. An example of such bitstream is presented in Figure 16, with a base layer of very good quality encoded at half the original rate. (a) shows the original stream with the base layer in black. Note that some scalable information is added on top of the base layer. (b) shows the base layer at half the original rate. (c) shows the fully scalable layer at half the original rate. Note that this layer can be of better quality/resolution than the base layer. (d) The scalable layer at 1/4 of the original rate and at reduced resolution. It is interesting to note that this approach allows the user to choose between two different half rate streams: One that is equal to the base layer, and thus might be backward compatible with previous decoding software/hardware. And the other one (see Figure 15), which is fully scalable, and can eventually include additional external video signals.

Summary of the features of the invention:

The main advantage of the presented invention is that it enables backwards compatibility with legacy decoding software/hardware. If the external video signal is encoded using any already deployed video compression CODEC to create a base bitstream (or base layer), and that the overall bitstream structure is designed in such a way that this base layer can be extracted in a transparent way, then legacy decoders could decode the base layer even if they are not aware of the scalable decoding procedure. On the other hand the scalable decoder can use both the base layer and the scalable information to decode any of the target frame rate, size or quality.

Another important point is that the external video signal can also be encoded using a scalable CODEC, which itself includes some other external video signal. In this case this allows building a more efficient scalable CODEC as this one can concentrate on a given set of scalability features, and use the base layer concept to enable the other ones.

When the external video information is used during the update step, then two additional features are enabled. They are both linked to the coding efficiency. The first one is that the compression of the video signal close to the frame-rate/size of the external video signal is improved for the same bitrate. This is due to the fact that the external CODEC does not need to be scalable and thus to "pay the price" for the other level of scalability. The second feature is that the number of MCTF levels can be significantly reduced, thus reducing the encoding/decoding delay of the CODEC. In order to be efficient in terms of compression the scalable CODEC must use a large number of MCTF levels to exploit the temporal redundancy in the video signal. However each level of MCTF introduces some additional delay. When an external video signal is used, it reduces the coding cost of the temporal low-pass frame, thus reducing the needs for a high number of MCTF levels. Moreover, as the external video signal does not need to be scalable other prediction patterns (such as closed-loop for instance) can be used. In this case the coding efficiency can be improved without increase of the coding/decoding delay.

When the external video information is used during the predict step a new set of features are enabled. They are not so much linked to coding efficiency, but more to error resilience and backwards compatibility. In this approach the coding efficiency is not really improved, as more information must be encoded in an intra fashion (no temporal prediction). However the fact that the external video signal is not always needed opens the door to a new set of features. First of them, more than a single base layer can be used. A single prediction step can include easily information coming form different external video signals. Moreover different video signals can be used at different levels of the MCTF. Another feature is that it is possible to decode the base layer video and some of the scalable video in a completely independent manner (see Figure 15) thus in case of errors in any of the two bitstreams, the other video can be reconstructed without any problems. Finally the last feature is that it is possible to create a scalable bitstream, which can be decoded in a lower quality/frame rate and/or frame size than that of the base layer.

Cited references:

[1] Seeker and D. S. Taubman, "Motion-compensated highly scalable video compression using an adaptive 3D wavelet transform based on lifting," *in IEEE proc. ICIP,* pp. 1029- 1032, 2001.

[2] Pesquet-Popescu and V. Bottreau, "Three-dimentional lifting schemes for motion compensated video ompression," in IEEE Trans. ICASSP, vol. 3, pp. 1793-1796, 2001.

[3] Pesquet-Popescu and M. Benetiere "Tridimensional Subband Video Coders" ("Encoding method for the compression of a video sequence), European patent number 1114555, or US patent number US6519284

[4] G. Pau, C. Tillier, B. Pesquet-Popescu, H. Heijmans, "Motion Compensation and Scalability in Lifting-Based Video Coding", Elsevier/EURASIP Signal Processing: Image Communication, special issue on Wavelet Video Coding, Jan 2004.

[5] Chrysafis, C.; Ortega, A;"Line-based, reduced memory, wavelet image compression, Image Processing, IEEE Transactions on , Volume: 9 , Issue: 3 , March 2000, Pages:378 - 389

[6] van der Schaar, M.; Radha, H; "A hybrid temporal-SNR fine-granular scalability for Internet video"; IEEE Transactions on Circuits and Systems for Video Technology, , Volume: 11 , Issue: 3 , March 2001; Pages:318-331

[7] Aravind, R.; Civanlar, M.R.; Reibman, A.R.; "Packet loss resilience of MPEG-2 scalable video coding algorithms"; IEEE Transactions on Circuits and Systems for Video Technology, Volume: 6 , Issue: 5 , Oct. 1996; Pages:426 - 435

[8] Feng Wu; Shipeng Li; Ya-Qin Zhang; "A framework for efficient progressive fine granularity scalable video coding"; , IEEE Transactions on Circuits and Systems for Video Technology, Volume: 11 , Issue: 3 , March 2001, Pages:332 - 344

[9] Arnold, J.F.; Fracter, M.R.; Yaqiang Wang; "Efficient drift-free signal-to-noise ratio scalability"; IEEE Transactions on Circuits and Systems for Video Technology, Volume: 10 , Issue: 1 , Feb. 2000, Pages:70 - 82

[10] Dugad, R.; Ahuja, N.; "A scheme for spatial scalability using nonscalable encoders, IEEE Transactions on Circuits and Systems for Video Technology, Volume: 13 , Issue: 10 , Oct. 2003, Pages:993 - 999

[11] Sikora, T ; MPEG digital video-coding standards;Signal Processing Magazine, Volume: 14 , Issue: 5 , Sept. 1997,Pages:82 - 100

**Claims**

1. Method for temporal decomposition and reconstruction of an input video signal based on the motion compensated temporal filtering (MCTF) framework, **characterized in that** at least one external video frame is used during one or more of the prediction and/or update steps as an additional video frame reference and this video frame is available as input both to the decomposition and reconstruction stages, and where external means that the video frame is not itself a result of the current MCTF processing.

2. Method according to claim 1, **characterized in that** the way the external video frames are introduced into the MCTF prediction steps is defined for the decomposition as

$$X'_{2t+1} = X_{2t+1} - f(\ldots, X_{2t}, X_{2t+2}, \ldots, EX_t, EX_{t+1}, \ldots)$$

and for the reconstruction as

$$Y_{2t+1} = Y'_{2t+1} + f'(\ldots, Y_{2t}, Y_{2t+2}, \ldots, EX_t, EX_{t+1}, \ldots),$$

where $X_t$ is the input video signal, $Y_t$ is the output video signal, $X'_t$ is the predicted video signal on the decomposition side, $Y'_t$ is the predicted video signal on the reconstruction side, $EX_t$ is the external video signal and f() and f'() are any function combining the different frames.

3. Method according to claim 2, **characterized in that** the function combining the different frames is equal to

$$f(\ldots) = k * f_1(\ldots, X_{2t}, X_{2t+2}, \ldots) + (1-k) * f_2(EX_t)$$

and

$$f'(\ldots) = k * f'_1(\ldots, Y_{2t}, Y_{2t+2}, \ldots) + (1-k) * f'_2(EX_t),$$

where k can be modified on a pixel and/or block basis, and $f_1(),f'_1()$ are typical MCTF prediction step functions, and $f_2(),f'_2()$ are scaling functions such as $f_2(EX_t)$ is a frame with the same size as $X_t$ and $f'_2(EX_t)$ is a frame with the same size as $Y_t$.

4. Method according to claim 1, **characterized in that** the way the external video frames are introduced into the MCTF update steps is defined for the decomposition as

$$X'_{2t} = X_{2t} + g(\ldots, X'_{2t-1}, X'_{2t+1}, \ldots, EX_t, EX_{t+1}, \ldots)$$

and for the reconstruction as

$$Y_{2t} = Y'_{2t} - g'(\ldots, Y'_{2t-1}, Y'_{2t+1}, \ldots, EX_t, EX_{t+1}, \ldots),$$

where $X_t$ is the input video signal, $Y_t$ is the output video signal, $X'_t$ is the predicted video signal on the decomposition side, $Y'_t$ is the predicted video signal on the reconstruction side, $EX_t$ is the external video signal and g() and g'() are any functions combining the different frames.

5. Method according to claim 4, **characterized in that** the function combining the different frames is equal to

$$g(\ldots) = g_1(\ldots, X_{2t}, X_{2t+2}, \ldots) - g_2(EX_t)$$

and

$$g'(\ldots) = g'_1(\ldots, Y_{2t}, Y_{2t+2}, \ldots) - g'_2(EX_t),$$

where $g_1(), g'_1()$ are typical MCTF update step functions, and $g_2(), g'_2()$ are scaling functions such as $g_2(EX_{t1})$ is a frame with the same size as $X_t$ and $g'_2(EX_{t1})$ is a frame with the same size as $Y_t$.

6. Method according to any of the claims 1 to 5, **characterized in that** at least one external video frame is used as additional video frame reference in at least one of the MCTF prediction or update steps in a single level of its temporal transform, and where the other steps in this level and in all the other levels are kept unchanged.

7. Method according to any of the claims 1 to 6, **characterized in that** the external video frames are used in the last level of the MCTF temporal transform.

8. Method according to any of the claims 1 to 7, **characterized in that** the use of external video frames as reference by the temporal decomposition and reconstruction is exploited in the context of a scalable video CODEC and that it still allows the decoding of the encoded video with some levels of spatial and/or temporal and/or quality scalability.

9. Method according to one of the claims 1, or 4, or 5, **characterized in that** the use of external video frames as reference by the temporal decomposition and reconstruction is exploited in the context of a scalable video CODEC, that it still allows the decoding of the encoded video with some levels of spatial and/or temporal and/or quality scalability, that the scalable CODEC uses a spatial transform for the spatial scalability, that k levels of spatial transforms are performed and that the external video frame is subtracted from the spatial low-pass frames on the temporal decomposition side and that k' levels of inverse spatial transform are applied after the addition of the external video frame on the reconstruction side, and where k>=k'>=0.

10. Method according to any of the claims 1 to 9, **characterized in that** the sequence of external video frames defines an external video signal whose frame rate ($R_e$) is related to the frame rate of the input video signal ($R_i$) by the relation $R_e = R_i/2^n$, where n is the level of MCTF temporal transform where the external video frames are used.

11. Method according to any of the claims 1 to 10, **characterized in that** the external video frames used in the proposed MCTF decomposition process are the result of an encoding and decoding process of the input video with any CODEC scheme and that the result of the encoding process by the selected CODEC is an external bitstream that must be available to the decoder side so as to enable the decoding of the external video frames used in the proposed MCTF reconstruction process.

12. Method according to any of the claims 1 to 11, **characterized in that** the external video signal is the decoded version of a video signal encoded using any of the existing video standards for compression such as MPEG-1, MPEG-2, MPEG-4, H.261, H.263 or H.264.

13. Method according to any of the claims 1 to 11, **characterized in that** the external video signal is itself encoded using a CODEC based on any of the claims 1 to 12.

**14.** Method according to any of the claims 8 to 13, **characterized in that** the spatial scalability is realized trough a wavelet transform of the video.

**15.** Method according to any of the claims 1 to 14, **characterized in that** the MCTF is based on the 5/3 temporal wavelet transform.

**16.** Method according to any of the claims 1 to 14, **characterized in that** the MCTF is based on the Haar temporal wavelet transform.

**17.** Method according to any of the claims 1 to 14, **characterized in that** the MCTF does not include an update step except for the use of the external video signal, i.e the $g_1()$ and $g_1'()$ are equal to zero.

**18.** Method according to any of the claims 1 to 1.7, **characterized in that** multiple independent external video signals are used, and where at most one external video signal is used in the update step and the other external video signals are used in the prediction steps.

# Fig.1

# Fig.2

# Fig.3

(a)          (b)          (c)          (d)

# Fig.4

Level 1

Level 2

Level 3

Temporal high-pass frames

Temporal low-pass frames

# Fig.5

Level 1

Level 2

External
video
signal

# Fig.6

Level 1

Level 2

Spatial
transform

External
video
signal

Fig.7

Level 1

Level 2

Spatial
transform

External
video
signal

Fig.8

Frame
2k-1

Frame
2k

Frame
2k+1

Frame
2k+2

ME/MC

Motion
Field

MC

External
frame k

ME/MC

Motion
Field

MC

ME/MC

Motion
Field

MC

External
frame k+1

# Fig.9

Level 1

Level 2

External
video
signal

# Fig.10

# Fig.11

# Fig.12

# Fig.13

# Fig.14

# Fig.15

(a)

External
video
signal

(b)

External
video
signal

# Fig.16

**European Patent Office**

# EUROPEAN SEARCH REPORT

Application Number

EP 04 01 5845

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LIN LUO ET AL: "Motion compensated lifting wavelet and its application in video coding" IEEE CONFERENCE ON MULTIMEDIA AND EXPO, 22 August 2001 (2001-08-22), pages 365-368, XP010661850 | 1,2,6-9, 14-16 | H04N7/26 H04N7/50 |
| Y | * page 481, right-hand column * <br> * page 482, paragraph 2.1 - page 483; figures 2,4 * <br> ----- | 11-13 | |
| Y | YONG KWAN KIM ET AL: "THREE-DIMENSIONAL SUBBAND CODING OF A IMAGE SEQUENCE BASED ON TEMPORALLY ADAPTIVE DECOMPOSITION" OPTICAL ENGINEERING, SOC. OF PHOTO-OPTICAL INSTRUMENTATION ENGINEERS. BELLINGHAM, US, vol. 35, no. 11, 1 November 1996 (1996-11-01), pages 3250-3259, XP000638622 ISSN: 0091-3286 * page 3251, paragraph 2 - page 3252; figure 2 * <br> ----- | 11-13 | |
| Y | KIM Y K ET AL: "ON THE ADAPTIVE 3D SUBBAND VIDEO CODING" PROCEEDINGS OF THE SPIE, SPIE, BELLINGHAM, VA, US, vol. 2727, no. 1, 1996, pages 123-132, XP000921420 ISSN: 0277-786X * page 124, paragraph 2 - page 125; figure Fig.1 * <br> ----- <br> -/-- | 11-13 | |

TECHNICAL FIELDS SEARCHED (Int.Cl.7)

H04N

The present search report has been drawn up for all claims

| Place of search | Date of completion of the search | Examiner |
|---|---|---|
| Munich | 15 November 2004 | Kuhn, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 04 01 5845

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ANDREOPOULOS Y ET AL: "Spatio-temporal-snr scalable wavelet coding with motion compensated dct base-layer architectures" IEEE INTERNATIONAL CONFERENCE ON IMAGE PROCESSING, ICIP 2003, vol. 2, 14 September 2003 (2003-09-14), pages 795-798, XP010669923 * pages II-795, paragraph 1-3 - pages II-797; figures 1,3 * | 1,2,6-9, 11-16 | |
| A | VAN DER SCHAAR M ET AL: "Fully Scalable 3-D Overcomplete Wavelet Video Coding using Adaptive Motion Compensated Temporal Filtering" ISO/IEC JTC1/SC29/WG11 M9037, XX, XX, October 2002 (2002-10), pages 1-8, XP002282536 * pages 1-8; figures 1-3 * | 1-18 | |
| A | OHM J-R: "Complexity and Delay Analysis of MCTF Interframe Wavelet Structures" ISO/IEC JTC1/SC29/WG11 MPEG02/M8520, XX, XX, July 2002 (2002-07), pages 1-16, XP002282535 * pages 1-16; figures 7,9-11 * | 1-18 | **TECHNICAL FIELDS SEARCHED** (Int.Cl.7) |
| A | ANDREOPOULOS Y ET AL: "Open-Loop, In-Band, Motion-Compensated Temporal Filtering For Objective Full-Scalability In Wavelet Video Coding" ISO/IEC JTC/SC29/WG11 M9026, XX, XX, October 2002 (2002-10), pages 1-19, XP002282534 * pages 1-19; figure 1 * | 1-18 | |

-/--

The present search report has been drawn up for all claims

| Place of search | Date of completion of the search | Examiner |
|---|---|---|
| Munich | 15 November 2004 | Kuhn, P |

EPO FORM 1503 03.82 (P04C01)

**EP 1 615 442 A1**

**European Patent Office**

**EUROPEAN SEARCH REPORT**

Application Number

EP 04 01 5845

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DOMANSKI M ET AL: "Hybrid coding of video with spatio-temporal scalability using subband decomposition" PROCEEDINGS OF THE SPIE, SPIE, BELLINGHAM, VA, US, vol. 3653, 25 January 1999 (1999-01-25), pages 1018-1025, XP002299788 ISSN: 0277-786X * figures 5,7 * | 1-18 | |
| A | BENZLER U: "SPATIAL SCALABLE VIDEO CODING USING A COMBINED SUBBAND-DCT APPROACH" IEEE TRANSACTIONS ON CIRCUITS AND SYSTEMS FOR VIDEO TECHNOLOGY, IEEE INC. NEW YORK, US, vol. 10, no. 7, October 2000 (2000-10), pages 1080-1087, XP000964379 ISSN: 1051-8215 * page 1080 - page 1087; figures 1-4 * | 1-18 | |

TECHNICAL FIELDS
SEARCHED     (Int.Cl.7)

The present search report has been drawn up for all claims

| Place of search | Date of completion of the search | Examiner |
|---|---|---|
| Munich | 15 November 2004 | Kuhn, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)